# EUROPÄISCHE PATENTSCHRIFT

(11) **EP 2 650 437 B1**
(45) Veröffentlichungstag und Bekanntmachung des Hinweises auf die Patenterteilung: **10.06.2020**
(21) Anmeldenummer: 13001725.4
(22) Anmeldetag: 04.04.2013
(51) Int. Cl.: E01C 19/48, F16C 29/04, F16C 33/58, B62D 1/18, B60K 37/06

(54) **Straßenfertiger mit einem bewegbaren Bedienpult**
Road finisher with a movable control panel
Finisseur de route avec pupitre de commande mobile

(30) Priorität: 12.04.2012 DE 202012003695 U
(43) Veröffentlichungstag der Anmeldung: 16.10.2013
(73) Patentinhaber: Joseph Vögele AG, 67067 Ludwigshafen (DE)
(72) Erfinder: Herzberg, Ingo, 74918 Angelbachtal (DE)
(74) Vertreter: Grünecker Patent- und Rechtsanwälte PartG mbB

(56) Entgegenhaltungen:
- EP-A1- 0 568 852
- DE-U1- 9 308 306
- DE-U1- 20 000 993
- DE-U1- 29 915 965
- DE-U1-202011 106 193
- VOEGELE AG: "Raupenfertiger SUPER 1600-2", , Dezember 2011 (2011-12), XP002763818, Gefunden im Internet: URL:http://www.fahrerclub.info/livebooks/S UPER_1600-2_DE/index.html [gefunden am 2016-11-04]

## Beschreibung

Die vorliegende Erfindung bezieht sich auf einen Straßenfertiger mit einem Bedienpult, das zwischen Endpositionen auf der linken und rechten Seite des Straßenfertigers in einem Bedienstand bewegt werden kann.

Straßenfertiger sind Baumaschinen, die beim Straßenbau eingesetzt werden, um eine Belagschicht auf der Straße aufzubringen. Dabei ist es insbesondere wichtig, dass der Bediener des Straßenfertigers während des Aufbringens des Belags den neu aufgebrachten Belag an der Seite und im hinteren Bereich des Straßenfertigers überwachen kann. Deswegen sind gewöhnlich Sitze für den Bediener im Bedienstand auf beiden Seiten des Straßenfertigers angebracht, von denen der Bediener jeweils den Belagauftrag auf einer Seite überwachen kann. Im Stand der Technik ist es bekannt, für jede Seite und damit für jeden Sitz ein Bedienpult vorzusehen, sodass insgesamt zwei Bedienpulte im Straßenfertiger verbaut werden müssen. Dies ist aber eine relativ aufwendige und kostenintensive Lösung, insbesondere wenn das Bedienpult eine Vielzahl von Anzeigen und Bedienelementen enthält.

Weiterhin wurde im Stand der Technik vorgeschlagen, das Bedienpult an einem Schwenkarm vorzusehen, sodass das Bedienpult zwischen den Endpositionen vor den jeweiligen Sitzen schwenkbewegt werden kann. Weiterhin ist es im Stand der Technik bekannt, dass das Bedienpult an einer Linearführung verschiebbar ist, die sich im Wesentlichen in Breitenrichtung des Straßenfertigers erstreckt, wobei eine Lagerung auf der Linearführung mittels Gleitführungen, wie in dem im Prospekt "Raupenfertiger SUPER 1600-2" aus Dezember 2011 der Joseph Vögele AG gezeigten Raupenförderer, oderRadialrollenlagern, wie in der DE 299 15 965 U gezeigt, erfolgt, die am Boden des Bedienstands oder an der Seite des Bedienstands angebracht sind. Diese Lagerung erfordert aber für Bedienpulte mit einem höheren Gewicht große notwendige Verschiebekräfte bzw. ein großes notwendiges Losbrechmoment. Zudem lässt sich mittels dieser Lagerungen das Spiel des Bedienpults bezüglich der Linearführung nicht einstellen.

Es ist die Aufgabe der vorliegenden Erfindung, einen Straßenfertiger mit einer verbesserten Lagerung eines bewegbaren Bedienpults bereitzustellen.

Diese Aufgabe wird durch einen Straßenfertiger mit einem Bedienstand und einem Bedienpult gelöst, das zwischen Endpositionen auf der linken und rechten Seite des Straßenfertigers in dem Bedienstand bewegt werden kann, wobei das Bedienpult eine mittels eines Axiallagers befestigte Lagerrolle aufweist, die im Eingriff mit einer am Bedienstand vorgesehenen Festlagerschiene ist. Die Lagerrolle ist in der Festlagerschiene verschieblich aufgenommen. Die mittels eines Axiallagers befestigte Lagerrolle kann Kräfte auch in ihrer Axialrichtung, das heißt in Richtung in ihrer Rotationsachse, übertragen, wodurch eine erheblich stabilere Lagerung ermöglicht wird. Die Axialrichtung des Axiallagers umfasst wenigstens eine vertikale Komponente. Damit kann die Gewichtskraft des Bedienpults durch das Axiallager auf die Festlagerschiene übertragen werden.

In einer Ausführungsform ist das Bedienpult mittels mehrerer Lagerrollen in der Festlagerschiene gelagert, von denen wenigstens eine in ihrer Position verstellt werden kann, um das Spiel der Lagerung einzustellen. Insbesondere kann die Position der wenigstens einen Lagerrolle in einer Richtung orthogonal zu ihrer Axialrichtung verstellt werden, sodass sie in Eingriff mit einem Eingriffsbereich der Festlagerschiene gelangt.

Vorteilhafterweise sind obere und untere Lagerschienen vorgesehen, in denen jeweils wenigstens eine Lagerrolle vorgesehen ist, wobei eine Lagerschiene so ausgebildet ist, dass Kräfte in zwei verschiedenen orthogonalen Richtungen zur Schienenerstreckungsrichtung von der Rolle aufgenommen werden können, und die andere Lagerschiene so ausgebildet ist, dass lediglich Kräfte in einer Richtung orthogonal zur Lagerschiene aufgenommen werden können. Damit ist die eine Lagerschiene als Festlagerschiene und die andere Lagerschiene als Loslagerschiene ausgebildet.

Insbesondere ist die obere Lagerschiene die Festlagerschiene und weist vordere und hintere, jeweils bezüglich der Lagerrolle im Wesentlichen konkav ausgebildete Eingriffsbereiche für die wenigstens eine Lagerrolle auf.

Insbesondere ist die untere Lagerschiene als Loslagerschiene ausgebildet, und weist vordere und hintere, jeweils im Wesentlichen parallel zueinander angeordnete Eingriffsbereiche für die wenigstens eine Lagerrolle auf.

Vorteilhafterweise ist die obere Lagerschiene nach oben offen ausgeführt. Somit kann die Lagerrolle von oben in die obere Lagerschiene eingesetzt werden.

Insbesondere ist die untere Lagerschiene nach unten offen ausgeführt. Somit kann die untere Lagerrolle von unten in die untere Lagerschiene eingesetzt werden.

Vorteilhafterweise weist das Bedienpult einen Bedienschlitten auf, der einen oberen Schenkel und einen unteren Schenkel umfasst, wobei an der unteren Seite von dessen oberem Schenkel wenigstens eine Lagerrolle befestigt ist, und an der Oberseite von dessen unterem Schenkel wenigstens eine Lagerrolle befestigt ist.

Insbesondere sind Schnappschlossmechanismen vorgesehen, um das Bedienpult in der rechten und linken Endposition zu sichern.

Die Erfindung wird nun anhand einer erfindungsgemäßen Ausführungsform beispielhaft erläutert, die in folgenden Figuren dargestellt ist.
Figur 1 zeigt eine perspektivische Ansicht von schräg rechts hinten auf das verschiebbare Bedienpult, das an einem Bedienpultlagerelement des Bedienstands gelagert ist.
Figur 2 zeigt eine Draufsicht von oben auf das Bedienpult und das Bedienpultlagerelement.
Figur 3 zeigt eine Schnittansicht A-A des Bedienpultlagerelements und des Bedienschlittens ohne das Bedienpult.

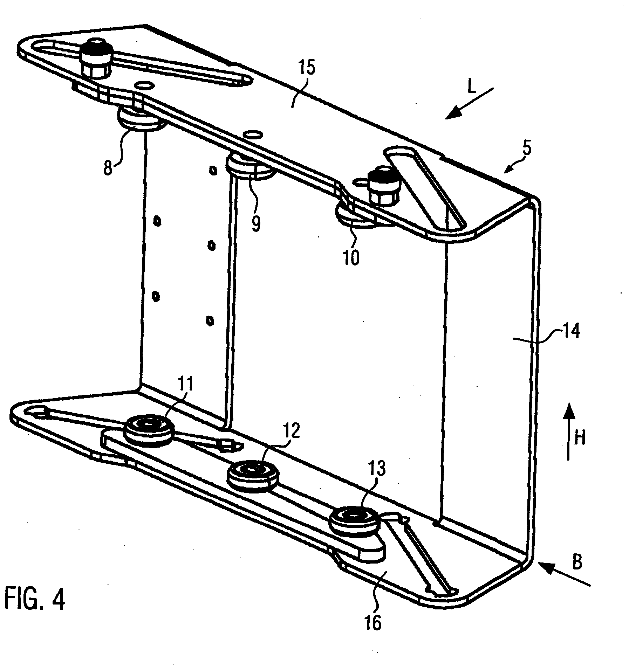

Figur 4 zeigt eine perspektivische Ansicht des Bedienschlittens.

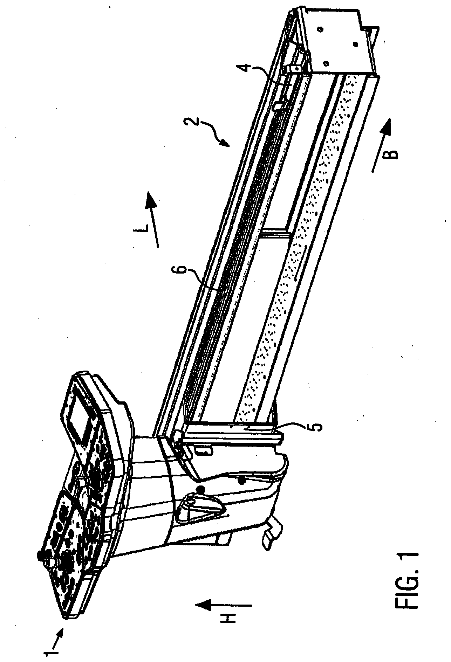

Figur 1 zeigt ein bewegbares Bedienpult 1 und ein Bedienpultlagerelement 2 für einen erfindungsgemäßen Straßenfertiger. Das Bedienpultlagerelement 2 erstreckt sich in Breitenrichtung B im Wesentlichen über die gesamte Breite des Straßenfertigers, der während seines Betriebs vornehmlich in Längsrichtung L bewegt wird. Das Bedienpult 1 ist entlang des Bedienpultlagerelements 2 im Wesentlichen in Breitenrichtung B linear verschieblich. In Figur 1 ist das Bedienpult 1 in der linken Endposition dargestellt. In der linken und rechten Endposition sind Verriegelungselemente in Form von Schnappschlossmechanismen 3, 4 an dem Bedienpultlagerelement 2 vorgesehen, die eine Verriegelung des Bedienpults 1 in den Endpositionen ermöglichen. Das Bedienpult 1 weist eine Vielzahl von Steuer- und Anzeigelementen auf. Weiterhin weist das Bedienpult einen Bedienschlitten 5 auf, mittels dessen es am Bedienpultlagerelement 2 verschieblich gelagert ist.

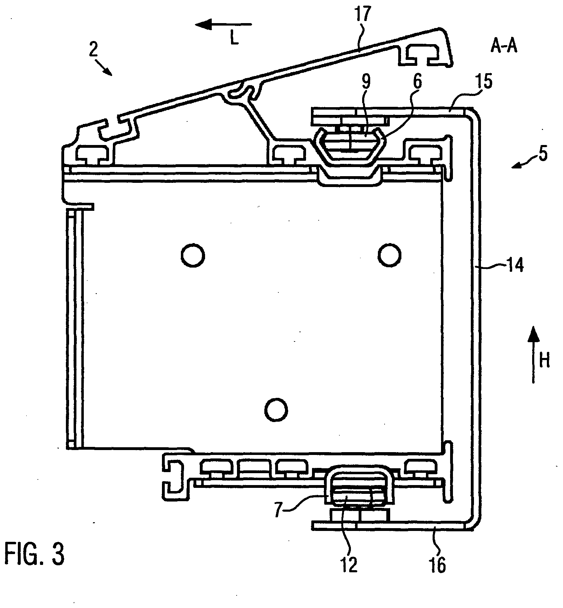

Das Bedienpultlagerelement 2 weist eine obere Lagerschiene 6 und eine untere Lagerschiene 7 auf, die in der Schnittansicht in Figur 3 dargestellt sind. In der Schnittansicht von Figur 3 ist vom Bedienpult 1 lediglich der Bedienschlitten 5 dargestellt.

Am Bedienschlitten 5 sind jeweils drei obere Lagerrollen 8, 9, 10 und drei untere Lagerrollen 11, 12, 13 befestigt, die jeweils im Eingriff mit der oberen Lagerschiene 6, bzw. der unteren Lagerschiene 7 sind. Dafür weist der Bedienschlitten 5 eine im Wesentlichen klammerförmige Form auf mit einem zentralen vertikalen Bereich 14, der sich vornehmlich in Hochrichtung H erstreckt, und oberen und unteren Schenkeln 15, 16, die sich jeweils ausgehend vom zentralen Bereich 14 in horizontaler Längsrichtung L nach vorne erstrecken. An der unteren Seite des oberen Schenkels ist zumindest eine der oberen Lagerrollen 8, 9, 10 mittels einer Axiallagerung angebracht, sodass die vertikale Gewichtskraft des Bedienpults 1 in die obere Lagerschiene eingeleitet werden kann.

Die Lagerrollen 8, 9, 10, 11, 12, 13 sind vornehmlich so angeordnet, dass sich ihre Drehachse in Höhenrichtung H erstreckt. Vorteilhafterweise sind sämtliche obere Lagerrollen 8, 9, 10 mittels Axiallagern gelagert. Allerdings wird darauf hingewiesen, dass die betreffenden Axiallager auch Kräfte in radialen Richtungen aufnehmen können, die sich beispielsweise durch das durch die exzentrische Lagerung des Bedienpults 1 bedingte Moment ergeben.

Die obere Lagerschiene 6 ist in ihren in Längsrichtung L vorderen und hinteren Eingriffsbereichen bezüglich der oberen Lagerrollen 8, 9, 10 konkav ausgeführt, sodass auch Kräfte in Hochrichtung H auf die obere Lagerschiene 6 übertragen werden können. Somit bildet die obere Lagerschiene 6 eine Festlagerschiene. Die untere Lagerschiene 7 weist dahingehend im Wesentlichen einen sich in Hochrichtung H erstreckenden Eingriffsbereich für die unteren Lagerrollen 11, 12, 13 auf, sodass die untere Lagerschiene nur Kräfte in Längsrichtung L aufnehmen kann. Dahingegen kann die obere Lagerschiene 6 Kräfte in Längsrichtung L und in Hochrichtung H aufnehmen.

Wenigstens eine der oberen Lagerrollen 8, 9, 10 und/oder der unteren Lagerrollen 11, 12, 13 ist einstellbar, das heißt in ihrer Position verstellbar. Vornehmlich ist die Position der verstellbaren Lagerrolle in Längsrichtung L veränderbar, wobei auch eine Einstellung in Hochrichtung H möglich sein kann. Insbesondere ist die zentrale, obere Lagerrollen 9 und/oder die zentrale untere Lagerrolle 12 einstellbar. Somit kann das Spiel der Lagerrollen 8, 9, 10; 11, 12, 13 in den jeweiligen Schienen 6, 7 durch Verstellen der verstellbaren Lagerrolle 9, 12 bezüglich der festen Lagerrollen 8, 10; 11, 13 eingestellt werden.

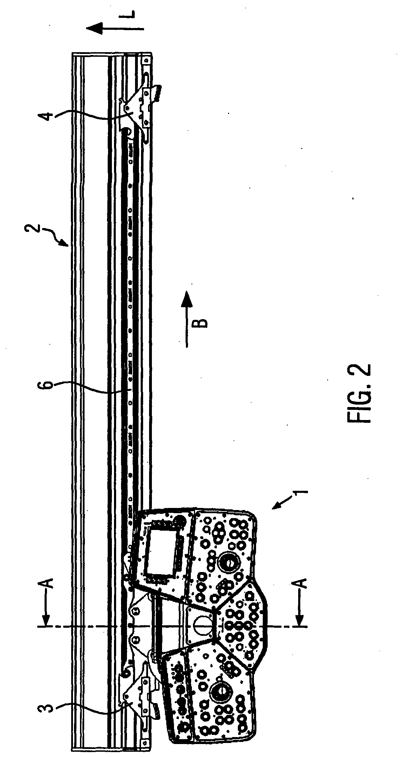

Insbesondere kann im oberen Bereich des Bedienpultlagerelements eine abnehmbare Schutzabdeckung 17 vorgesehen sein, die die obere Lagerschiene 6 überdeckt und somit die Sicherheit der Bedienung der Vorrichtung erhöht. Die abnehmbare Schutzabdeckung 17 ist in Figuren 1 und 2 nicht dargestellt.

Die Ausgestaltung des Bedienpultlagerelements und des Bedienschlittens ermöglicht, dass vornehmlich elektrische oder hydraulische, gegebenenfalls auch pneumatische Steuerleitungen in vorteilhafterweise mit dem Bedienschlitten mitgeführt werden können, da sie in geeigneter Art und Weise in oder an dem Bedienpultlagerelement angeordnet werden können. Weiterhin kann erfindungsgemäß die Wahl und Positionierung der Bedienelemente des Bedienschlittens so erfolgen, dass die Erreichbarkeit und Sinnfälligkeit der Bedienung deutlich verbessert wird.

## Patentansprüche

1. Straßenfertiger mit einem Bedienstand und einem Bedienpult (1), das zwischen Endpositionen auf der linken und rechten Seite des Straßenfertigers in dem Bedienstand bewegt werden kann, wobei das Bedienpult (1) eine Lagerrolle (8, 9, 10) aufweist, die im Eingriff mit einer am Bedienstand vorgesehenen Festlagerschiene (6) ist,
**dadurch gekennzeichnet, dass**
die Lagerrolle (8, 9, 10) mittels eines Axiallagers befestigt ist, dessen Axialrichtung wenigstens eine vertikale Komponente aufweist, und in der Festlagerschiene (6) verschieblich aufgenommen ist.

2. Straßenfertiger nach Anspruch 1, **dadurch gekennzeichnet, dass** das Bedienpult (1) mittels mehrerer Lagerrollen (8, 9, 10) in der Festlagerschiene (6) gelagert ist, von denen wenigstens eine in ihrer Position verstellt werden kann, um das Spiel der Lagerung einzustellen.

3. Straßenfertiger nach einem der vorangehenden Ansprüche, **dadurch gekennzeichnet, dass** obere und untere Lagerschienen (6, 7) vorgesehen sind, in denen jeweils wenigstens eine Lagerrolle (8, 9, 10, 11, 12, 13) vorgesehen ist, wobei eine Lagerschiene als die Festlagerschiene (6) ausgebildet ist, so dass Kräfte in zwei orthogonalen Richtungen zur Schienenerstreckungsrichtung von der Lagerrolle (8, 9, 10) aufgenommen werden können, und die andere Lagerschiene (7) so ausgebildet ist, dass lediglich Kräfte in einer Richtung orthogonal zur Lagerschiene (7) aufgenommen werden können.

4. Straßenfertiger nach Anspruch 3, **dadurch gekennzeichnet, dass** die obere Lagerschiene (6) vordere und hintere, jeweils bezüglich der Lagerrolle (8, 9, 10) im Wesentlichen konkav ausgebildete Eingriffsbereiche für die wenigstens eine Lagerrolle (8, 9, 10) aufweist.

5. Straßenfertiger nach Anspruch 3 oder 4, **dadurch gekennzeichnet, dass** die untere Lagerschiene (7) vordere und hintere, jeweils im Wesentlichen parallel zueinander angeordnete Eingriffsbereiche für die wenigstens eine Lagerrolle (11, 12, 13) aufweist.

6. Straßenfertiger nach einem der Ansprüche 3 bis 5, **dadurch gekennzeichnet, dass** die obere Lagerschiene (6) nach oben offen ausgeführt ist.

7. Straßenfertiger nach einem der Ansprüche 3 bis 6, **dadurch gekennzeichnet, dass** die untere Lagerschiene (7) nach unten offen ausgeführt ist.

8. Straßenfertiger nach einem der vorangehenden Ansprüche 3-7, **dadurch gekennzeichnet, dass** das Bedienpult (1) einen Bedienschlitten (5) aufweist, der einen oberen Schenkel (15) und einen unteren Schenkel umfasst, wobei an der Unterseite von dessen oberen Schenkel (15) wenigstens eine der Lagerrollen (8, 9, 10) befestigt ist, und an der Oberseite von dessen unterem Schenkel (16) wenigstens eine der Lagerrollen (11, 12, 13) befestigt ist.

9. Straßenfertiger nach einem der vorangehenden Ansprüche, **dadurch gekennzeichnet, dass** Schnappschlossmechanismen (3, 4) vorgesehen sind, um das Bedienpult (1) in der rechten und linken Endposition zu sichern.

## Claims

1. Road finishing machine with a control platform and a control panel (1) which can be moved between end positions on the left and right sides of the road finishing machine in the control platform, wherein the control panel (1) comprises a bearing roller (8, 9, 10) which is engaged with a fixed bearing rail (6) provided at the control platform,
**characterized in that**
the bearing roller (8, 9, 10) is fixed by means of a thrust bearing, the axial direction of which comprises at least one vertical component, and is movably received in the fixed bearing rail (6).

2. Road finishing machine according to claim 1, **characterized in that** the control panel (1) is held in the fixed bearing rail (6) by means of several bearing rollers (8, 9, 10), where the position of at least one of them can be adjusted to adjust the clearance of the bearing.

3. Road finishing machine according to one of the preceding claims, **characterized in that** upper and lower bearing rails (6, 7) are provided in which at least one bearing roller (8, 9, 10, 11, 12, 13) each is provided, one bearing rail (6) being embodied as fixed bearing rail such that forces can be absorbed by the bearing roller (8, 9, 10) in two orthogonal directions with respect to the extension direction of the rail, and the other bearing rail (7) being embodied such that forces can be absorbed only in one direction orthogonal with respect to the bearing rail (7).

4. Road finishing machine according to claim 3, **characterized in that** the upper bearing rail (6) comprises front and rear engagement regions for the at least one bearing roller (8, 9, 10) each designed to be essentially concave with respect to the bearing roller (8, 9, 10).

5. Road finishing machine according to claim 3 or 4, **characterized in that** the lower bearing rail (7) comprises front and rear engagement regions for the at least one bearing roller (11, 12, 13) which are each arranged essentially in parallel with respect to each other.

6. Road finishing machine according to one of claims 3 to 5, **characterized in that** the upper bearing rail (6) is designed to be open to the top.

7. Road finishing machine according to one of claims 3 to 6, **characterized in that** the lower bearing rail (7) is designed to be open to the bottom.

8. Road finishing machine according to one of the preceding claims, **characterized in that** the control panel (1) comprises a control slide (5) which comprises an upper leg (15) and a lower leg, where at least one bearing roller (8, 9, 10) is fixed to the bottom side of its upper leg (15), and at least one bearing roller (11, 12, 13) is fixed to the upper side of its lower leg (16).

9. Road finishing machine according to one of the preceding claims, **characterized in that** snap lock mechanisms (3, 4) are provided to secure the control panel (1) in the right and left end positions.

## Revendications

1. Finisseur de route comprenant un pupitre de commande et un panneau de commande (1) mobile entre des positions d'extrémité sur les côtés gauche et droit du finisseur de route dans le pupitre de commande, dans lequel le panneau de commande (1) comprend un rouleau de palier (8, 9, 10) qui s'engage dans un rail de roulement fixe (6) prévu sur le pupitre de commande,
**caractérisé en ce que**
le rouleau de palier (8, 9, 10) est fixé au moyen d'un palier de butée dont la direction axiale présente au moins une composante verticale, et est reçu de manière déplaçable dans le rail de roulement fixe (6).

2. Finisseur de route selon la revendication 1, **caractérisé en ce que** le panneau de commande (1) est supporté dans le rail de roulement fixe (6) au moyen d'une pluralité de rouleaux de palier (8, 9, 10), dont la position d'au moins l'un d'entre eux peut être réglée pour ajuster le jeu du roulement.

3. Finisseur de route selon l'une des revendications précédentes, **caractérisé en ce que** des rails de roulement supérieurs et inférieurs (6, 7) sont prévus, dans chacun desquels est prévu au moins un rouleau de palier (8, 9, 10, 11, 12, 13), un rail de roulement étant formé comme rail de roulement fixe (6), de sorte que les forces dans deux directions orthogonales à la direction d'extension du rail peuvent être absorbées par le rouleau de palier (8, 9, 10), et l'autre rail de roulement (7) est conçu de sorte que seules les forces dans une direction orthogonale au rail de roulement (7) peuvent être absorbées.

4. Finisseur de route selon la revendication 3, **caractérisé en ce que** le rail de roulement supérieur (6) présente des zones d'engagement avant et arrière pour ledit au moins un rouleau de palier (8, 9, 10), dont chacune est formée de manière sensiblement concave par rapport au rouleau de palier (8, 9, 10).

5. Finisseur de route selon les revendications 3 ou 4, **caractérisé en ce que** le rail de roulement inférieur (7) présente des zones d'engagement avant et arrière pour ledit au moins un rouleau de roulement (11, 12, 13), dont chacune est disposée sensiblement parallèlement à l'autre.

6. Finisseur de route selon l'une des revendications 3 à 5, **caractérisé en ce que** le rail porteur supérieur (6) est ouvert en haut.

7. Finisseur de route selon l'une des revendications 3 à 6, **caractérisé en ce que** le rail de roulement inférieur (7) est ouvert en bas.

8. Finisseur de route selon l'une des revendications précédentes 3-7, **caractérisé en ce que** le rail de roulement inférieur (7) est ouvert en bas,
**en ce que** le panneau de commande (1) comporte un chariot de commande (5) qui comprend une jambe supérieure (15) et une jambe inférieure, au moins l'un des rouleaux de palier (8, 9, 10) étant fixé à la face inférieure de sa jambe supérieure (15), et au moins l'un des rouleaux de roulement (11, 12, 13) étant fixé à la face supérieure de sa jambe inférieure (16).

9. Finisseur de route selon l'une des revendications précédentes, **caractérisé en ce que** des mécanismes de verrouillage par encliquetage (3, 4) sont prévus pour fixer le panneau de commande (1) dans les positions finales droite et gauche.
